(19) Europäisches Patentamt / European Patent Office / Office européen des brevets

(11) EP 4 025 653 B1

(12) **EUROPEAN PATENT SPECIFICATION**

(45) Date of publication and mention of the grant of the patent:
**15.11.2023 Bulletin 2023/46**

(21) Application number: **20792511.6**

(22) Date of filing: **02.10.2020**

(51) International Patent Classification (IPC):
***C09D 5/14*** *(2006.01)* ***C09D 7/63*** *(2018.01)*
***C08K 5/00*** *(2006.01)*

(52) Cooperative Patent Classification (CPC):
**C09D 5/14; C09D 7/63;** C08K 5/0091

(86) International application number:
**PCT/US2020/053956**

(87) International publication number:
**WO 2021/067707 (08.04.2021 Gazette 2021/14)**

(54) **STAIN RESISTANT ADDITIVE**

FLECKENBESTÄNDIGES ADDITIV

ADDITIF RÉSISTANT AUX TACHES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2019 US 201962910091 P**
**30.10.2019 EP 19206369**

(43) Date of publication of application:
**13.07.2022 Bulletin 2022/28**

(73) Proprietor: **Arxada AG**
**3930 Visp (CH)**

(72) Inventors:
- **CALDWELL, Brittany**
  **Morristown, New Jersey 07960 (US)**
- **BRADFORD, Rochelle**
  **Morristown, New Jersey 07960 (US)**
- **KETIYAVALLAPPIL, Dilipraj Tara**
  **Morristown, New Jersey 07960 (US)**
- **TUNGAL, Richa**
  **Morristown, New Jersey 07960 (US)**
- **JANAK, Kevin**
  **Morristown, New Jersey 07960 (US)**

(74) Representative: **Greiner, Elisabeth**
**df-mp Dörries Frank-Molnia & Pohlman**
**Patentanwälte Rechtsanwälte PartG mbB**
**Theatinerstraße 16**
**80333 München (DE)**

(56) References cited:
**EP-A1- 0 775 734**
**EP-A2- 0 789 063**
**US-A- 3 607 834**
**US-A- 5 454 861**
**US-A1- 2005 131 176**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 025 653 B1

## Description

This application is related and has right of priority to U.S. Provisional Application No. 62/910,091, filed on Oct 3, 2019, and to EP Application No. EP19206369.1, filed on October 30, 2019.

## BACKGROUND

Paints and coatings are used to protect a surface from corrosion, oxidation, or other types of deterioration and to provide decorative effects. Such coatings can include water-based latex coatings, oil-based coatings, enamels, urethanes, epoxy coatings, and the like. Oil-based paints or coatings, for instance, typically include a uniformly dispersed mixture ranging in viscosity from a thin liquid to a semi-solid paste. Such coatings can include a film-forming polymeric binder, an organic solvent, pigment, and other additives. The binder and the solvent collectively make what is known as the "vehicle". Water-based paints or coatings include a dispersion of dry powders of pigment combined with various paint additives such as fillers and extenders. The composition can also include a resin dispersion. Typically, the dry powder dispersion is made by milling the dry ingredients into water. The resin dispersion is either a latex formed by emulsion polymerization or a resin in emulsion form. The two dispersions are blended to form an emulsion or latex paint.

Coatings, including paints, can become covered with soil and dirt, as well as microorganisms such as fungi and algae. Interior surfaces coated with architectural paints can be subjected to various sources of stains, such as food and drinks, cosmetics, or writing utensils. Further, such coatings can also be subjected to microorganism growth, particularly in humid locations or areas, such as bathrooms. In the above environments, the coatings can become covered with microorganisms, affecting the aesthetic quality of the surface and, in some cases, providing harmful conditions for immunocompromised individuals due to spore-forming fungal growth. For this reason, biocides are incorporated into coating formulations in order to reduce the growth of microorganisms and preserve the aesthetic quality of the surface.

In addition to biocides, those skilled in the art have also created other additives intended to impart stain resistance to the dried coating. For example, in the past, in an attempt to improve stain resistance, emulsion polymers contained within the coating composition or paint have been modified.

For instance, U.S. Patent No. 6,485,786 discloses an aqueous stain-blocking coating composition that includes an emulsion polymer that contains a mixture of monomers from an unsaturated ethylenic nonionic monomer and an unsaturated ethylenic strong acid monomer. The resultant emulsion polymer has a glass transition temperature ($T_g$) from -20 °C to 60 °C, initially calculated from the weight fraction of each monomer making up the copolymer, according to:

$$\frac{1}{T_g} = \sum_{i}^{n} \frac{X_i}{T_{gi}}$$

where, $X_i$ is the weight fraction of each monomer making up the polymer and $T_{gi}$ is the glass transition temperature of the monomer (in Kelvin).

In addition to modifying emulsion polymers, in other embodiments, attempts have been made to improve stain resistance by incorporating various polymers into the coating formulation. For example, polydimethylsiloxane copolymers in the presence of selected surfactants have been shown to provide some stain resistance in certain applications. Other polymeric stain resistant additives have included incorporating phosphoethyl methacrylate oligomers into binders. Phosphoethyl methacrylate polymers have also been combined with arginine functionalized monomers and acetoacetoxy monomers. Unfortunately, however, the use of phosphoethyl monomers can lead to a decrease in scrub resistance.

In view of the above, a need exists for an additive and method for increasing the stain resistance of coating compositions, such as water-based and oil-based paints.

## SUMMARY

In general, the present disclosure is directed to a stain resistant additive for incorporating into coating compositions. In accordance with the present disclosure, the stain resistant additive is non-polymeric and can be in the form of a solid particle incorporated into the coating composition. In general, the stain resistant additive is a metal complex of an acetoacetate ligand that provides improved anti-stain performance against non-biological and biological sources that results in both easier removal of stain and improved longevity and resistance to staining.

In one embodiment, for instance, the present disclosure is directed to a coating composition comprising a base composition combined with a stain resistant additive. The stain resistant additive comprises a metal complexed with an acetoacetate derivative. The acetoacetate derivative can have the following formula:

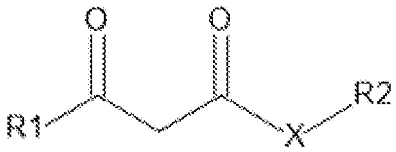

wherein X is O or N; $R_1$ is an alkyl group containing 1 to 20 carbon atoms or is a fluoroalkyl group containing 1 to 20 carbon atoms; and $R_2$ is an alkyl group containing 1 to 20 carbon atoms or is a fluoroalkyl group containing 1 to 20 carbon atoms.

In one embodiment, $R_1$ is a fluoroalkyl group containing 1 to 10 carbon atoms, such as a trifluoro group, and $R_2$ is an alkyl group containing 1 to 20 carbon atoms. In an alternative embodiment, both $R_1$ and $R_2$ contain a fluoroalkyl group. In yet another embodiment, $R_1$ is an alkyl group containing 1 to 20 carbon atoms and $R_2$ is a fluoroalkyl group containing 1 to 10 carbon atoms. In still another embodiment, the acetoacetate derivative may be fluorine free wherein $R_1$ and $R_2$ are both alkyl groups containing 1 to 20 carbon atoms.

The metal that is complexed with the acetoacetate derivative, in one embodiment, is zinc. Generally, however, the metal can be an alkali metal, an alkaline earth metal, or a transition metal.

In one example, the acetoacetate derivative comprises ethyl 4,4,4-trifluoroacetoacetate or methyl 4,4,4-trifluoroacetoacetate and the metal complexed with the acetoacetate derivative is zinc. For instance, the stain resistant additive may be zinc di(ethyl 4,4,4-trifluoroacetoacetate) or zinc di(methyl 4,4,4-trifluoroacetoacetate). In one embodiment, the stain resistant additive is a hydrate complex, such as a dihydrate complex.

The base composition combined with the stain resistant additive can vary depending upon the particular application. For example, the base composition may comprise an alkyd coating, a urethane coating, an unsaturated polyester coating, an epoxy coating, a latex coating, or the like. The base composition can be water-based or oil-based. The coating composition can also contain one or more pigments. For instance, the coating composition may be a paint.

The stain resistant additive, for instance, can be combined with all different types of solvent-based paints and latex or water-based paints. Organic solvent-based paint is a uniformly-dispersed mixture ranging in viscosity from a thin liquid to a semi-solid paste and includes a polymeric binder; an organic solvent; pigment, colorant, tinting agent and/or metal effect agent; and other additives. The polymeric binder can be a drying oil, natural, semi-synthetic or synthetic resin such as polyacrylate, polyurethane, modified alkyd resin or other film-forming polymer. Included as well in the binder usually is a cross-linking agent, hardener, curing agent and/or secondary resin having cross-linking ability. The polymeric binder and the solvent collectively make what is known as the "vehicle."

Latex or emulsion paint is a water-based paint including a dispersion of dry powders of pigment, plus various paint additives, such as fillers and extenders, and a resin dispersion. The dry powder dispersion is made by milling the dry ingredients into water. The resin dispersion is either a latex formed by emulsion polymerization or a resin in emulsion form, constituting the binder. The two dispersions are blended to form latex paint. Thus, the binder for latex paints is in an aqueous-dispersed form, whereas in a solvent paint, it is in a soluble form.

The stain resistant additive can be present in the coating composition generally in an amount greater than about 0.01 % by weight, such as in an amount greater than about 0.05% by weight, such as in an amount greater than about 0.1% by weight, such as in an amount greater than about 0.5% by weight and generally in an amount less than about 5% by weight, such as in an amount less than about 2% by weight.

As described above, the stain resistant additive can be in the form of a solid particle. The particle can have an average particle size of from about 0.01 microns to about 50 microns. The stain resistant additive can be contained in a dispersion when combined into the coating composition. In this regard, the present disclosure is also directed to an anti-stain composition containing stain resistant additive particles as described above combined with a liquid carrier. The liquid carrier, for instance, can contain non-aqueous components such as an alcohol, a glycol, an ethoxylated ester, an alkoxylated alcohol, or mixtures thereof. The liquid carrier, for instance, can be polyethylene glycol.

The present disclosure is also directed to a method for producing a coating composition. The method includes blending a base coating with a stain resistant additive as described above.

Other features and aspects of the present disclosure are discussed in greater detail below.

## DETAILED DESCRIPTION

It is to be understood by one of ordinary skill in the art that the present discussion is a description of exemplary embodiments only, and is not intended as limiting the broader aspects of the present disclosure.

The present disclosure is generally directed to a composition and method for endowing coating compositions with an improved ability to resist discoloration. More particularly, the present disclosure is directed to a non-polymeric stain resistant additive that, when combined with a coating composition, allows for greater ease of removal of common household stains. The stain resistant additive, either alone or in conjunction with one or more biocides, can also prevent

the growth of microorganisms on the surface of the dried coating.

The stain resistant additive in accordance with the present disclosure comprises a metal complex of an acetoacetate derivative. The stain resistant additive can be in the form of a solid particle that can be added directly to a coating formulation or can be added to a polymer dispersion that is later used in a coating composition.

The stain resistant additive of the present disclosure can provide numerous benefits and advantages. For example, because the stain resistant additive can be incorporated into the coating formulation as a solid particle, the stain resistant additive does not adversely interfere or otherwise affect polymers that are present in the coating composition. Thus, the stain resistant additive can be easily incorporated into many different coating compositions including architectural (interior and exterior) coatings, construction paints and coatings, oil and gas coatings, wood composite coatings and wood composite plastics, fluorine paints and coatings, and the like. For example, because the stain resistant additive is an inert non-polymeric particle, incorporating the stain resistant additive into a coating composition does not require changing any of the binders or polymers contained within the coating composition and does not require modification of any polymers present in the coating formulation. For example, in the past, attempts to improve stain resistance required modification of the polymer backbone of polymers contained within the coating composition, which is not only costly but can lead to inconsistent results depending upon the application.

In some applications, the stain resistant additive of the present disclosure, when incorporated into a coating composition, may provide for a reduced biocidal surface load while maintaining similar performance and use. The stain resistant additive, for instance, may work in conjunction with one or more biocides that prevents or inhibits the growth of microorganisms at reduced amounts of biocides in comparison to coating formulations used in the past. In this aspect, the stain resistant additive can further provide cost advantages and allow for product formulations that minimize biocidal content.

As described above, the stain resistant additive generally comprises a metal complex of an acetoacetate derivative. For example, the acetoacetate derivative can form a bidentate ligand with the metal. The acetoacetate derivative that is complexed with the metal can have the following formula:

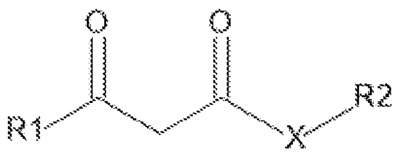

wherein X can be O or N.

$R_1$ above can be a hydrocarbyl group, such as an alkyl group, or a fluoroalkyl group. $R_1$, for instance, can be a fluoroalkyl group containing from about 1 to about 10 carbon atoms, such as from about 1 to about 4 carbon atoms, such as from about 1 to about 3 carbon atoms. Alternatively, $R_1$ can be an alkyl group containing from about 1 to about 20 carbon atoms. For instance, $R_1$ can be an alkyl group containing from about 1 to about 12 carbon atoms, such as from about 1 to about 6 carbon atoms.

$R_2$ in the above formula is generally a hydrocarbyl group. $R_2$, for example, can be an alkyl group containing 1 to 20 carbon atoms, such as from about 1 to about 12 carbon atoms, such as from about 1 to about 6 carbon atoms. $R_2$ can be a methyl group, an ethyl group, a butyl group, or a propyl group. Alternatively, $R_2$ can be a fluoroalkyl group. The fluoroalkyl group, for instance, can contain from about 1 to about 18 carbon atoms, such as from about 1 to about 12 carbon atoms, such as from about 1 to about 4 carbon atoms. Thus, the acetoacetate derivative can include a single fluoroalkyl group or can include two fluoralkyl groups positioned on opposite sides of the molecule.

In one embodiment, the acetoacetate derivative may comprise a fluorinated Beta-keto ester. For example, the acetoacetate derivative can be ethyl 4,4,4-trifluoroacetoacetate.

The metal that is complexed with the acetoacetate derivative can be an alkali metal, an alkaline earth metal, or a transition metal. A particular metal can be selected depending upon the particular application. For instance, a metal can be selected that provides the desired anti-staining properties for use in a particular coating composition. A metal can also be selected so as to obtain a molecule with particular characteristics, such as a particle that is inert within a coating composition and/or does not dissolve within a coating composition. Particular metals that are well suited for use in producing the stain resistant additive are copper and/or zinc. In one embodiment, for instance, the metal is zinc. Other metals that may be selected include calcium, sodium, potassium, titanium, or zirconium.

As described above, the stain resistant additive may be in the form of a solid. When in the form of a solid, the stain resistant additive may be a particle that is incorporated into a coating composition. The particle can have a flake-like or plate-like shape. For instance, the particle can have an aspect ratio of greater than about 4, such as greater than about 6, such as greater than about 8, and generally less than about 100, such as less than about 50, such as less than about 20.

The size of the stain resistant additive particles can be controlled and adjusted as desired. For instance, the

stain resistant additive particles can have a particle size of greater than about 2 microns, such as greater than about 5 microns, and generally less than about 12 microns, such as less than about 10 microns, such as less than about 8 microns. Alternatively, the stain resistant additive can have a relatively small size. The small size can be a result of how the additive is formed or the solid particles can be ground or milled to produce a particular size. For instance, the stain resistant additive particles can have an average particle size of less than about 4 microns, such as less than about 2 microns, such as less than about 1 micron, such as less than about 0.5 microns, such as less than about 0.1 microns, such as less than about 0.05 microns and generally greater than 0.01 microns. The stain resistant additive particles, for instance, can be nanoparticles having an average particle size of from about 10 nanometers to about 800 nanometers, such as from about 20 nanometers to about 500 nanometers, such as from about 30 nanometers to about 100 nanometers. Of particular advantage, the stain resistant additive particles are essentially colorless and hence do not interfere with pigments contained in the coating composition or the overall color of the coating composition.

Although the stain resistant additive particles can be directly incorporated into a coating composition, in one embodiment, the stain resistant additive particles are dispersed in a liquid carrier which is then used to combine the stain resistant additive with various other coating composition components. Although the liquid carrier can contain water, the liquid carrier generally contains at least one non-aqueous component. For example, the liquid carrier can contain an alcohol, a glycol, an alcohol alkoxylate, a polysorbate, an alkoxylated ester, a polyether, or mixtures thereof. In one aspect, the liquid carrier is polyethylene glycol (CAS No. 25322-68-3). Additional carriers include, but are not limited to, ethylene glycol (CAS No. 107-21-1), propylene glycol (CAS No. 57-55-6), alcohol ethoxylates such as polyoxyethylene(4) lauryl alcohol ether (CAS No. 9002-92-0) or octylphenol ethoxylates (CAS No. 9002-93-1), polysorbates (CAS No. 9005-64-5), ethoxylated esters (e.g., CAS No. 25322-68-3), polyethers such as diglyme (CAS No. 111-96-6), triglyme (CAS No. 112-49-2), and tetraglyme (CAS No. 143-24-8). One or more of the above carriers may be used in the absence of water. For instance, the anti-stain composition may contain water in an amount less than about 1% by weight, such as less than 0.5% by weight.

Once the stain resistant additive is combined with the liquid carrier, an anti-stain composition is produced containing the stain resistant additive particles dispersed and/or suspended within the liquid carrier. In one aspect, a liquid carrier can be selected such that the stain resistant additive does not settle over a relatively short period of time and that the particles remain suspended and stable for an extended period of time. In fact, a relatively high concentration of particles can be maintained in a suspended state within the liquid carrier. In one aspect, for instance, the anti-stain composition can contain greater than about 10% by weight, such as greater than about 15% by weight, such as greater than about 20% by weight, such as greater than about 25% by weight, such as greater than about 30% by weight, such as greater than about 35% by weight, such as greater than about 45% by weight of the stain resistant additive with the remainder of the composition comprising the liquid carrier.

The stain resistant additive particles are generally present in the anti-stain composition in conjunction with the liquid carrier in an amount less than about 90% by weight, such as in an amount less than about 80% by weight, such as in an amount less than about 70% by weight, such as in an amount less than about 60% by weight, such as in an amount less than about 50% by weight.

The stain resistant additive alone or in combination with the liquid carrier can be incorporated into all different types of coating compositions. Coating compositions that can be combined with the stain resistant additive of the present disclosure include generally all oil-based or solvent-based coatings and generally all water-based coatings. Such coatings can include oil-based paints including alkyd paints, water-based acrylic paints, water-based latex paints, water-based acrylic alkyd paints, urethane coatings, epoxy coatings, and the like. As used herein, a "base composition" to be combined with the stain resistant additive is meant to include all of the above coatings and/or any precursor formulations that are used to produce the above coatings. In addition, any of the above coatings can include one or more enamels. Enamels are added to coating compositions, for instance, in order to make the dried surface harder and less porous.

Oil-based coatings are typically made with either a synthetic oil referred to as an alkyd or a natural oil, such as linseed oil. Alkyd coatings based on an alkyd resin include paints, clear coatings, or stains. Alkyd resins are branched or cross-linked polyesters having unsaturated aliphatic acid residues.

Conventional alkyd coatings utilize, as the binder or film-forming component, a curing or drying alkyd resin. Alkyd resin coatings have unsaturated aliphatic acid residues derived from drying oils. These resins spontaneously polymerize in the presence of oxygen or air to yield a solid protective film. The polymerization is termed "drying" or "curing" and occurs as a result of autoxidation of the unsaturated carbon-carbon bonds in the aliphatic acid component of the oil by atmospheric oxygen. When applied to a surface as a thin liquid layer of formulated alkyd coating, the cured films that form are relatively hard, non-melting, and substantially insoluble in many organic solvents that act as solvents or thinners for the unoxidized alkyd resin or drying oil.

Another type of base composition are water-based coatings including acrylic and latex coatings. Acrylic and latex coatings have a lower volatile organic content than oil-based coatings. Latex coatings are similar to acrylic coatings in that they are both water-based and produced from acrylic resins. Water-based coatings as described above can include an emulsion, latex, or suspension of a film-forming material dispersed in an aqueous phase. Various other

ingredients can be contained in the coating composition. Water-based coating compositions include not only paints, but unpigmented coatings such as wood sealers, stains and finishes. Other water-based coating compositions include coatings for masonry and cement and water-based asphalt emulsions.

The stain resistant additive of the present disclosure can also be incorporated into urethane coatings. Urethane coatings, for instance, can be identified by the five categories listed in ASTM D-1. Urethane coatings can include paints, clear coatings, and/or stains. Some urethane coatings have a pre-reacted autoxidizable binder. Urethane coatings, for instance, can comprise the reaction product of a polyisocyanate and a polyhydric alcohol ester. The polyisocyanate, for instance, may be toluene diisocyanate. Urethane coatings cure by air oxidation and polymerization of the unsaturated drying oil residue in the binder.

Still another type of coating composition that can benefit from the stain resistant additive are epoxy coatings. Epoxy coatings use epoxy compounds as coatings in paints and can be water-based or oil-based. Epoxy coatings typically come in a two-part form. The two parts are mixed prior to application and include an epoxy resin that is cross-linked with a co-reactant or hardener. When catalyzed and applied, epoxy coatings produce a hard, chemical and solvent resistant finish. Epoxy coatings form thermoset resins. Epoxy coatings are typically used on concrete and steel to give resistance to water, alkali and acids. Many epoxy coatings are used in floor applications. In addition, epoxy coatings are applied to cast iron, cast steel and cast aluminum.

Many of the coating compositions described above can include a pigment. Representative pigments that can be used include, but are not limited to, rutile and anatase $TiO_2$, clays such as kaolin clay, asbestos, calcium carbonate, zinc oxide, chromium oxide, barium sulfate, iron oxide, tin oxide, calcium sulfate, talc, mica, silicas, dolomite, zinc sulfide, antimony oxide, zirconium dioxide, silicon dioxide, cadmium sulfide, cadmium selenide, lead chromate, zinc chromate, nickel titanate, diatomaceous earth, glass fibers, glass powders, glass spheres, MONASTAL Blue G (C. I. Pigment Blue 15), molybdate Orange (C. I. Pigment Red 104), Toluidine Red YW (C I. Pigment 3)-process aggregated crystals, Phthalo Blue (C I. Pigment Blue 15)-cellulose acetate dispersion, Toluidine Red (C. I. Pigment Red 3), Watchung Red BW (C. I. Pigment Red 48), Toluidine Yellow GW (C. I. Pigment Yellow 1), MONASTRAL Blue BW (C. I. Pigment Blue 15), MONASTRAL Green BW (C. I. Pigment Green 7), Pigment Scarlet (C. I. Pigment Red 60), Auric Brown (C. I. Pigment Brown 6), MONASTRAL Green G (C I. Pigment Green 7), MONASTRAL Maroon B, MONASTRAL Orange, and Phthalo Green GW 951.

Titanium dioxide pigment can be in the rutile or anatase crystalline form. It is commonly made by either a chloride process or a sulfate process. In the chloride process, $TiCl_4$ is oxidized to $TiO_2$ particles. In the sulfate process, sulfuric acid and ore containing titanium are dissolved, and the resulting solution goes through a series of steps to yield $TiO_2$.

Titanium dioxide particles have an average size of generally less than 1 micron but can vary up to as large as an average size of 10 microns. Preferably, the particles have an average size from about 0.02 to about 0.95 microns, such as from about 0.05 to about 0.75 microns.

If the pigment is titanium dioxide it can be substantially pure titanium dioxide or can contain other metal oxides, such as silica, alumina, zirconia, and the like. Other metal oxides can become incorporated into the pigment particles for example, by co-oxidizing or co-precipitating titanium compounds with other metal compounds. If co-oxidized or co-precipitated metals are present, they are preferably present in an amount from about 0.1 to about 20 percent by weight, as the metal oxide.

The titanium dioxide pigment can also bear one or more metal oxide surface coatings. Examples of metal oxide coatings include silica, alumina, and zirconia, among others. Such coatings can be present in an amount from about 0.1 to about 10 percent by weight, based on the total weight of the pigment.

The stain resistant additive of the present disclosure can be combined with any of the coating compositions described above. The amount of the stain resistant additive that is added to the coating composition can depend upon various factors including the type of coating composition, the end use of the coating composition, and the types of stains that the dried coating composition may encounter. In general, the stain resistant additive is present in the coating composition in an amount greater than about 0.01 % by weight, such as in an amount greater than about 0.05% by weight, such as in an amount greater than about 0.1% by weight, such as in an amount greater than about 0.5% by weight, and generally in an amount less than about 5% by weight, such as in an amount less than about 2% by weight, such as in an amount less than about 1% by weight, such as in an amount less than about 0.8% by weight.

The stain resistant additive can be incorporated into a coating composition using any suitable method or process. For instance, the stain resistant additive alone or in combination with a liquid carrier, can be incorporated into a coating composition after the coating composition has been formulated. In an alternative embodiment, the stain resistant additive alone or in conjunction with the liquid carrier can be combined with one or more components to form a precursor mixture. The precursor mixture can then be combined with further components for forming a coating composition.

Another advantage to the stain resistant additive of the present disclosure is that the stain resistant additive is generally compatible with many different biocides. Thus, the stain resistant additive can be incorporated into a coating composition in conjunction with one or more biocides. For example, the coating composition can contain a pyrithione in

conjunction with the stain resistant additive.

Pyrithione is known by several names, including 2 mercaptopyridine-N-oxide; 2-pyridinethiol-1-oxide (CAS Registry No. 1121-31-9); 1-hydroxypyridine-2-thione and 1 hydroxy-2(1H)-pyridinethione (CAS Registry No. 1121-30-8). Pyrithione salts are commercially available from Lonza, Inc., such as Sodium OMADINE or Zinc OMADINE.

The pyrithione can be present in a water insoluble form or in a water soluble form. The pyrithione may comprise sodium pyrithione, zinc pyrithione, barium pyrithione, strontium pyrithione, copper pyrithione, cadmium pyrithione, and/or zirconium pyrithione. Other pyrithiones that may be present in the composition include sodium pyrithione, bismuth pyrithione, potassium pyrithione, lithium pyrithione, ammonium pyrithione, calcium pyrithione, magnesium pyrithione, silver pyrithione, gold pyrithione, manganese pyrithione, and/or an organic amine pyrithione. A single pyrithione may be present in the composition or a combination of any of the above may be included.

Insoluble pyrithione particles can have a particle size such that 100% of the particles have a particle size of less than about 10 microns and at least 70% of the particles have a particle size less than 5 microns, such as at least about 50% of the particles can have a particle size of 1 micron or less. Particle size can be measured using a laser scattering particle size analyzer, such as a HORIBA LA 910 particle size analyzer.

The pyrithione particles can be produced by reacting pyrithione or a water-soluble salt of pyrithione, and a water-soluble polyvalent metal salt in a pressurized, turbulent flow reactor that generates pulverizing forces. The pulverizing forces produced by the pressurized, turbulent flow reactor efficiently generate pyrithione salt particles of micron size. The micron-sized pyrithione salt particles made by the method have a narrow and uniform size distribution, and have excellent surface deposition properties due to the large surface area provided by the population of micron particles.

Another biocide that may be present in the coating composition in conjunction with the stain resistant additive is an iodoalkynyl carbamate. The iodoalkynl carbamate, for instance, can generally have the following formula:

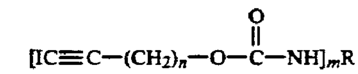

in which m is 1, 2 or 3; n is 1, 2 or 3; and R is hydrogen (H); an unsubstituted or substituted alkyl, aryl, aralkyl alkylaryl, alkenyl, cycloalkyl, or cycloalkenyl or an alkoxy aryl all having from one to not more than 20 carbon atoms, and m and n may be the same or different.

Suitable R substituents for the iodoalkynyl carbamate compound include alkyls such as methyl, ethyl, propyl, n-butyl, t-butyl, pentyl (amyl), hexyl, heptyl, octyl, nonyl, decyl, dodecyl, octadecyl, cycloalkyls such as cyclohexyl, aryls, alkaryls and aralkyls such as phenyl, benzyl, tolyl, cumyl, halogenated alkyls and aryls, such as chlorobutyl and chlorophenyl, and alkoxy aryls such as ethoxyphenyl and the like. Thus, suitable carbamate compounds are selected from the group consisting of 3-iodo-2-propynyl butyl carbamate (IPBC), 3-iodo-2-propynyl hexyl carbamate (IPHC), 3-iodo -2-propynyl cyclohexyl carbamate (IPCC), 3-iodo-2-propynyl phenyl carbamate (IPPhC), 3-iodo-2-propynyl benzyl carbamate (IP Benzyl C), 3-iodo-2-propynyl propyl carbamate (IPPC), 4-iodo-3-butynyl propyl carbamate (IBPC), 3-iodo-2-propynyl-4-chloro phenyl carbamate (IPC1PhC), 3-iodo-2-propynyl-4-chloro butyl carbamate (IPC1BC) and mixtures thereof.

The stain resistant additive of the present disclosure can also be combined with amino compounds that serve as biocides. For example, one embodiment of an amino compound biocide is 2-(methoxycarbonylamino)-benzimidazole (Carbendazim). Other amino biocides include 1,3-bis(2-ethylhexyl)-5-methyl-5-aminohexahydro-pyrimidine, hexamethylenetetramine, 1,3-bis(4,aminophenoxy)propane, dodecylamine, or mixtures thereof.

The stain resistant additive can also be combined with a urea derivative, such as a phenylurea. The biocide, for example, may be 3-(3,4-dichlorophenyl)-1,1-dimethylurea.

Further examples of biocides that may be used in conjunction with the stain resistant additive are heterocyclic compounds such as 2-(tert-butylamino)-4-(cyclopropylamin)-6-(methylthio)-1,3,5-triazine [cybutryne], azoles including 4,5-dichloro-2-n-octyl-4-isothiazolin-3-one [DCOIT], 1,2-benzisothiazolin-3-one [BIT], 2-octyl-3(2H)-isothiazolone [OIT], 2-(thiocyanatomethylthio)-1,3-benzothiazole [benthiazole], 3-benzo[b]thien-2-yl-5,6-dihydro-1,4,2-oxathiazine-4-oxide [bethoxazin] and 2,3,5,6-tetrachloro-4-(methylsulphonyl)pyridine; amides and imides of carboxylic acids, sulphonic acids and sulphenic acids such as N-(dichlorofluoromethylthio)phthalimide, N-dichlorofluoromethylthio-N',N'-dimethyl-N-phenylsulfamide [dichlofluanid], N-dichlorofluoromethylthio-N',N'-dimethyl-N-p-tolylsulfamide [tolylfluanid] and N-(2,4,6-trichlorophenyl) maleimide.

Other examples of biocidal agents are tetra-alkylphosphonium halogenides, guanidine derivatives, imidazole containing compounds such as 4-[1-(2,3-dimethylphenyl)ethyl]-1H-imidazole [medetomidine] and derivatives, macrocyclic lactones including avermectins and derivatives thereof such as ivermectine, or spinosyns and derivatives thereof such as spinosad, or enzymes such as oxidase, or proteolytically, hemicellulolytically, cellulolytically, lipolytically or amylolytically active enzymes.

Any of the above biocides can be combined together and used in conjunction with the stain resistant additive

of the present disclosure. In addition, coating compositions made according to the present disclosure can be free of any copper compound biocides.

When combined together in a coating composition, the stain resistant additive of the present disclosure and any of the above biocides can be present in the composition at a weight ratio of from about 15:1 to about 1:100, such as from about 5:1 to about 1:50, such as from about 2:1 to about 1:10.

The manner in which the stain resistant additive and one or more biocides are combined and present in a coating composition can depend on various factors including any issues that may be present with respect to compatibility. In one aspect, the stain resistant additive and one or more biocides can be incorporated into a coating composition individually and separately. The stain resistant additive and the one or more biocides can be combined with any of the subcomponents of the coating composition and then later combined together.

Alternatively, the stain resistant additive and the one or more biocides can be combined together as a mixture or blend that is then added to a coating composition. For instance, as described above, the stain resistant additive can be combined with a liquid carrier, such as an alcohol or a glycol. One or more biocides can be incorporated into the anti-stain composition. A biocide can be selected that forms a solution within the liquid carrier. Alternatively, a biocide can be selected that remains suspended in the liquid carrier in conjunction with the stain resistant additive. When combined together in the liquid carrier, the weight ratio between the stain resistant additive and the one or more biocides can be the same as the weight ratio ranges described above.

The present disclosure may be better understood with reference to the following examples.

## EXAMPLES

### Test Procedures

The following test procedures were used to generate the data reported in the Examples below.

Household Stain Resistance Test

Procedure (ASTM Method D4828):

1. Cast the test paint on a black plastic panel using a 3.5 mil (wet, approx) Dow applicator. Cast a control paint adjacent to the test paint. Dry 1 week at 23 °C (± 2 °C) and 50% (± 5%) relative humidity.
2. Mark one half inch (12.7 mm) sections across the test panel. The total number of sections should correspond to the total number of stains selected plus a one half inch (12.7 mm) gap between stains.
3. Each stain is then applied uniformly to fill in the test area. In order to contain stains to the test area, wet stains, such as coffee, can be applied over a one half inch (12.7 mm) strip of cheesecloth which will soak up excess liquid and prevent bleeding into the other stain areas or use a cotton-tipped swab to control amount of applied liquid.
4. Allow the stains to soak for at least sixty minutes.
5. Wipe off the excess stain with a dry paper towel or dry cheesecloth.
6. Scrub panels up to 100 cycles using a sponge and liquid or powder cleanser with a washability machine. The cycle should be a full forward and reverse stroke at a rate of 37 +/- 1 cpm
7. Rinse panel thoroughly with water, let dry, and then rate the degree of stain removal by eye, on a scale of (-) for negative,(=) for same, and (+) for positive result by comparing relative to unscrubbed sides.

Black Stain Resistance Test

Procedure (ASTM Method D3450):

1. Cast the test paint on a black plastic panel chart with a 3.5 mil (wet, approx) Dow applicator. Cast a control paint adjacent to the test paint. Dry 1 week at 23 °C (± 2 °C) and 50% (± 5%) relative humidity.
2. Once dry, measure the directional reflectance of a portion of the panel in accordance with Test Method E1347. Record this value as $R_1$.
3. After recording the reflectance, use the applicator with a 3-mil clearance to draw down a film of soilant media. Allow to dry for 16 - 24 hr under the conditions above.
4. Soak a sponge with the designated reagent cleaning solution, ensuring that it is wet but no water drips following squeezing to remove excess solution.
5. Wipe off the excess soilant with a dry paper towel and rolling with a 2.25 kg rubber roller.
6. Attach the sponge to a washability machine. After addition of 5 mL of water on each side of the holder, start the motor and allow the sponge to travel 25 cycles at a rate of 37 ± 1 cycles per minute (cpm). At the end of 25 cycles,

stop the machine, remove the sponge, clean, squeeze dry, and resoak in water. Wipe off excess stain outside the test area and re-soak the sponge according to step 4.

7. Repeat step 6 for 100 cycles. Clean accordingly after the final 25 cycles.

8. Rinse panel thoroughly with water, let dry, and wipe off excess stain. Measure the reflectance as in step 2, recording as $R_2$. Calculate the reflectance recovery in percent as $(R_2/R_1) \times 100$.

Determination of Resistance of Paint Films to Algal Defacement

Procedure (Modified ASTM Method D5589):

1. Sample substrates are coated with the corresponding paint samples containing the targeted amount of additive and antimicrobial.
2. Depending upon the test conditions, samples are subjected to UV, leaching conditions, standard conditions, or a combination thereof. Leaching was performed for up to 7 days and with or without up to 600 hr of QUV in a weathering chamber.
3. 4 algal species are used and inoculated every 2 weeks, including up to 18 weeks. Fresh plates were replaced at weeks 4, 10, 14, and 18.
4. Ratings are scored on a range of 0 - 4, with 0 showing no growth and 4 showing the highest growth.

Determination of Resistance of Paint Films to Fungal Defacement

Procedure (Modified ASTM Method D5590)

The paints were tested for fungicidal properties according to the ASTM D5590-17 Standard Test Method for Determining the Resistance of Paint Films and Related Coatings to Fungal Defacement by Accelerated Four-Week Agar Plate Assay. Apart from the standard fungi recommended by the test method, two additional fungi were used in the fungal challenge

- The additional fungi used were
    - *Alternaria alternata* ATCC 6663
    - *Cladosporium cladosporioides* ATCC 16022

1. The substrate was sterilized by autoclaving.
2. Two coats of the paint were applied by brush on both sides of the sterilized filter paper substrate, with at least 4 hours between coats.
3. The coated substates were allowed to air dry for 72 hours at room temperature.
4. Circular discs of 1 inch (25.4 mm) diameter were punched out of the coated substrate.
5. One set of the test discs was leached for 72 hours in a dynamic leach bath using tap water, with a flow rate such that there are six changes in 24 hours. After leaching the test specimen were dried overnight at 50°C.
6. Another set of the test discs was tested without leaching.
7. Sufficient number of test discs were prepared, so that each dose could be tested in triplicate, against a mixed fungal spore suspension & separately with *Aureobasidium pullulans* in the unleached and leached conditions.
8. An untreated control paint was always tested in a similar fashion in every set of testing.

Microbial Testing

| Test Organism(s): | |
|---|---|
| *Alternaria alternata* | ATCC 6663 |
| *Aspergillus niger* | ATCC 6275 |
| *Aureobasidium pullulans* | ATCC 9348 |
| *Cladosporium cladosporioides* | ATCC 16022 |
| *Talaromyces pinophilus* | ATCC 11797 |

**Fungal Inoculum Preparation**

Fungal cultures were grown on potato dextrose agar (PDA) slants or plates. After incubation, the appropriate buffered solution was used to create spore suspensions of the organisms. Spore suspensions were diluted to obtain a count of between 0.8 to 1.2 × 106 spores/ml

**Inoculation of Test Samples**

For *Aureobasidium pullulans,* the test discs were placed on PDA plates, and the test discs were spray inoculated in a biosafety cabinet (BSC) using a sterile spray system.
For mixed fungal challenge equal volumes of the *A. niger, T. pinophilus, A. alternata,* and *C. cladosporioides* were combined. The test discs were placed on PDA plates, and the test discs were spray inoculated with this mixed spore suspension in a biosafety cabinet (BSC) using a sterile spray system.
The samples were incubated at 28±2°C under 85 to 90% relative humidity for 4 weeks. Samples were rated weekly for percent coverage of the sample by test fungi.

**Evaluation of Results**

At the end of incubation the samples were visually rated for percent coverage of the sample by test fungi and any zones of inhibition (ZOI) were measured (mm) and recorded.

**Visual Evaluation of Test Organism Growth**

**Rating Scale**

0 = None
1 = Traces of growth (1-10%)
2 = Light growth (11-30%)
3 = Medium growth (31-60%)
4 = Heavy growth (61-100%)

Procedure (Modified ASTM Method D3273): The paints were tested for fungicidal properties according to the ASTM D3273-16 - Standard Test Method for Resistance of Mold on the Surface of Interior Coatings in an Environmental Chamber

**Summary of the test**

**Preparation of test specimens**

Substrate: Gypsum board panels 0.5 inch (12.7 mm) thick, 3 inches (76. 2 mm) × 4 inches (101.6 mm)

- The backing of the test panel was coated with Kilz® all-purpose primer.
- Two coats of the paint were applied by brush on the face and sides of the test panel, with at least 4 hours between coats. (Only the face of the test panel was rated)
- The coated substates were allowed to air dry for 72 hours at room temperature.
- Each test paint was tested in triplicate.
- An untreated control paint was also tested with each set of test paints.

**Microbial Testing**

- The Environmental chamber prepared and sporulation checked as described in the standard was used for test.
- The test panels were placed on rods in the chamber in a manner so replicates from the same sample are not immediately next to each other whenever possible.
- The rods were suspended in the chamber above the inoculated soil and incubate at 90±2°F (32.2±1.1°C) for four

weeks.

- Samples were rated weekly, for percent coverage of the sample by test fungi.

**Calculations and Interpretation of Results:**

At the end of incubation, the final week ratings for the replicates of a sample were averaged. When reporting the results only the four-week averages were reported in the final report.

**Visual Evaluation of Test Organism Growth:**

**Rating Scale:**

10 = None
9 = 1-10% defacement
8 = 11-20% defacement
7 = 21-30% defacement
6 = 31-40% defacement
5 = 41-50% defacement
4 = 51-60% defacement
3 = 61-70% defacement
2 = 71-80% defacement
0 = 91-100% defacement

Example 1

A water-based paint was formulated in order to test the stain resistance performance of a stain resistant additive in accordance with the present disclosure. The stain resistant additive tested was zinc di(ethyl 4,4,4-trifluoroacetoacetate) dihydrate. Stain resistance was tested relative to the same formulation without the stain resistant additive. The water-based paint that was formulated is as follows:

Table 1

| Component | Wt. % Solids | Wt. % Volume |
|---|---|---|
| Charge: | | |
| Water | 27.5 | 38.3 |
| Dispersant-sodium salt of a maleic anhydride copolymer | 1.1 | 1.2 |
| Non-ionic surfactant-isooctylphenoxypolyethoxyethanol | 0.1 | 0.2 |
| Mineral oil-based defoamer | 0.1 | 0.2 |
| Thickener-water soluble hydroxyethyl cellulose | 0.3 | 0.3 |
| Ethylene glycol | 2.9 | 3.7 |
| | | |
| Grind: | | |
| Extender-calcined aluminum silicate | 8.8 | 4.6 |
| Filler/extender-sodium-potassium alumina silicate | 14.6 | 7.8 |
| Titanium dioxide particles | 15.2 | 5.4 |
| Thickener/gelling agent-attapulgite colloidal clay | 0.6 | 0.3 |
| | | |
| Letdown: | | |
| Acrylic binder, emulsion polymer (50% sol) | 20.5 | 26.5 |

(continued)

| | | |
|---|---|---|
| Letdown: | | |
| 2,2,4-trimethyl-1,3,-pentandiolmonoisobutyrat | 0.4 | 0.5 |
| Mineral oil-based defoamer | 0.4 | 0.5 |
| Water | 7.4 | 10.4 |
| | | |
| Adjustments: | | |
| Thickener-water soluble hydroxyethyl cellulose | 0.1 | 0.1 |
| | | |
| Total | 100.0 | 100.0 |
| *Specific Gravity = 1.38; PVC = 57%; % volume solids = 37 | | |

The above paint formulation was tested alone, in conjunction with 0.05% by weight of the stain resistant additive and with 0.5% by weight of the stain resistant additive. Stain resistance was determined in comparison to the paint formulation without containing the stain resistant additive. The following results were obtained:

Table 2

| Stain | Paint with 0.05% Additive | Paint with 0.5% Additive |
|---|---|---|
| Pencil | = | + |
| Lipstick | = | + |
| Crayon | = | = |
| Marker | = | + |
| Ball-pen | = | = |
| Red wine | SI- | = |
| Mustard | - | SI + |
| Ketchup | = | = |
| Coffee | = | SI - |

Example 2

Several commercial paints were modified via the addition of the stain resistant additive used in Example 1. Stain resistance was measured relative to the same commercial paint without the corresponding additive. The following results were obtained:

Table 3

| Stain | Commercial Paint 1 with 0.05% Additive | Commercial Paint 1 with 0.5% Additive | Commercial Paint 2 with 0.05% Additive | Commercial Paint 2 with 0.5% Additive |
|---|---|---|---|---|
| Lipstick | = | + | = | + |
| Crayon | = | = | = | = |
| Marker | = | = | = | = |
| Ball-pen | = | = | = | + |
| Red wine | SI + | = | = | = |
| Mustard | = | = | = | = |

(continued)

| Stain | Commercial Paint 1 with 0.05% Additive | Commercial Paint 1 with 0.5% Additive | Commercial Paint 2 with 0.05% Additive | Commercial Paint 2 with 0.5% Additive |
|---|---|---|---|---|
| Ketchup | = | = | = | = |
| Coffee | = | + | = | + |

Example 3

In this example, the stain resistant additive of the present disclosure was incorporated into the water-based paint formulation described in Example 1 and tested for interior black stain resistance. Black stain resistance was measured relative to the same formulation without the stain resistant additive. The following results were obtained:

Table 4

| Stain | Paint with 0.05% Additive | Paint with 0.5% Additive |
|---|---|---|
| Rating | SI- | + |

Example 4

The stain resistant additive of Example 1 was combined with two commercial paints and tested for interior black stain resistance. Black stain resistance was recorded relative to the same formulation without containing the stain resistant additive. The following results were obtained:

Table 5

| Stain | Commercial Paint 1 with 0.05% Additive | Commercial Paint 1 with 0.5% Additive | Commercial Paint 2 with 0.05% Additive | Commercial Paint 2 with 0.5% Additive |
|---|---|---|---|---|
| Black | = | + | = | + |

Example 5

In this example, the stain resistant additive of the present disclosure was tested in conjunction with various biocides. The stain resistant additive of the present disclosure was the same additive described in Example 1.

More particularly, the paint formulation described in Example 1 was modified by adding the stain resistant additive of the present disclosure alone or in combination with various biocides. The samples were scored and tested for zone of inhibition (ZOI) according to modified ASTM Test D5589 and the following results were obtained:

Table 6

| Sample ID | Conc. (%) | 4 wk Rating | 4 wk ZOI | 10 wk Rating | 10 wk ZOI | 14 wk Rating | 14 wk ZOI | 18 wk Rating | 18 wk ZOI |
|---|---|---|---|---|---|---|---|---|---|
| Untreated Control | - | 3 | 0 | 4 | 0 | 4 | 0 | 4 | 0 |
| Untreated Control | - | 4 | 0 | 4 | 0 | 4 | 0 | 4 | 0 |
| Untreated Control | - | 4 | 0 | 4 | 0 | 4 | 0 | 4 | 0 |
| Zinc pyrithione | 0.7% | 0 | 15 | 0 | 0 | 0 | 0 | 3 | 0 |
| Zinc pyrithione | " | 0 | 15 | 0 | 0 | 0 | 0 | 2 | 0 |
| Zinc pyrithione | " | 0 | 15 | 0 | 15 | 0 | 7.5 | 1 | 0 |
| 9% 2-(methoxycarbonylamino)-benzimidazole, 3% iodopropynyl butyl carbamate, and 15% (3-(3,4-dichlorophenyl)-1,1-dimethylurea) containing product | 0.6% | 0 | 15 | 0 | 15 | 0 | 0 | 4 | 0 |
| 9% 2-(methoxycarbonylamino)-benzimidazole, 3% iodopropynyl butyl carbamate, and 15% (3-(3,4-dichlorophenyl)-1,1-dimethylurea) containing product | " | 0 | 15 | 0 | 7.5 | 2 | 0 | 3 | 0 |
| 9% 2-(methoxycarbonylamino)-benzimidazole, 3% iodopropynyl butyl carbamate, and 15% (3-(3,4-dichlorophenyl)-1,1-dimethylurea) containing product | " | 0 | 15 | 0 | 15 | 0 | 7.5 | 3 | 0 |
| Zinc pyrithione + zinc di(ethyl 4,4,4-trifluoroacetoacetate) dihydrate | 0.3% + 0.3% | 0 | 15 | 0 | 0 | 0 | 0 | 0 | 0 |
| Zinc pyrithione + zinc di(ethyl 4,4,4-trifluoroacetoacetate) dihydrate | " | 0 | 15 | 0 | 0 | 0 | 0 | 1 | 0 |
| Zinc pyrithione + zinc di(ethyl 4,4,4-trifluoroacetoacetate) dihydrate | " | 0 | 15 | 0 | 0 | 0 | 0 | 0 | 0 |
| Zinc di(ethyl 4,4,4-trifluoroacetoacetate) | 0.3% | 1 | 0 | 3 | 0 | 2 | 0 | 3 | 0 |
| dihydrate | | | | | | | | | |
| Zinc di(ethyl 4,4,4-trifluoroacetoacetate) dihydrate | " | 0 | 0 | 1 | 0 | 3 | 0 | 3 | 0 |
| Zinc di(ethyl 4,4,4-trifluoroacetoacetate) dihydrate | " | 0 | 0 | 2 | 0 | 1 | 0 | 2 | 0 |

Example 6:

In this example, the stain resistant additive of the present disclosure was tested in conjunction with various biocides. The stain resistant additive of the present disclosure was the same additive described in Example 1. More particularly, the paint formulation described in Example 1 was modified by adding the stain resistant additive of the present disclosure alone or in combination with various biocides. The samples were scored according to modified ASTM Test D5589 and the following results were obtained:

Table 7

| Sample | Test Concentration of Biocide (ppm) | Test Concentration of Additive (ppm) | Average 4 week rating |
|---|---|---|---|
| Blank | - | - | 3.3 |
| Additive | - | 1,000 | 3.7 |
| " | | 3,000 | 2.0 |
| N-octyl isothiazolinone | 350 | - | 2.7 |
| " | 700 | - | 1.0 |
| " | 1,050 | - | 1.3 |
| " | 350 | 1,000 | 3.7 |
| " | 700 | 1,000 | 0.7 |
| " | 1,050 | 1,000 | 0.0 |
| " | 350 | 3,000 | 1.7 |
| " | 700 | 3,000 | 0.0 |
| " | 1,050 | 3,000 | 0.0 |

Example 7:

In this example, the additive of the present disclosure was tested in conjunction with a dry film biocide. The stain resistant additive of the present disclosure was the same additive described in Example 1. More particularly, the paint formulation described in Example 1 was modified by adding the stain resistant additive of the present disclosure alone or in combination with various biocides. The samples were scored and tested according to modified ASTM Test D5590 with the mixed fungal challenge and the following results, monitored weekly, were obtained:

Table 8

| Sample | 7d | 14d | 21d | 28d |
|---|---|---|---|---|
| Blank | 5.0 | 5.0 | 5.0 | 5.0 |
| 0.1% Zinc Pyrithione (38%) | 2.7 | 3.3 | 4.0 | 4.3 |
| 0.1% Zinc Pyrithione (38%) + 0.0125% Additive | 2.0 | 3.0 | 3.3 | 5.0 |
| 0.1% Zinc Pyrithione (38%) + 0.0250% Additive | 0.0 | 1.0 | 1.0 | 1.0 |

Example 8:

In this example, the additive of the present disclosure was tested in conjunction with a dry film biocide. The stain resistant additive of the present disclosure was the same additive described in Example 1. More particularly, the paint formulation described in Example 1 was modified by adding the stain resistant additive of the present disclosure alone or in combination with various biocides. The samples were scored and tested according to ASTM Test D3273, whereby the performance of the biocide in combination with the additive equals or exceeds the performance of higher levels of the additive, as shown in Table 9:

Table 9

| Sample | Test Concentration of Biocide (ppm) | Test Concentration of Additive (ppm) | Average 4 week rating |
|---|---|---|---|
| Blank | - | - | 3.2 |
| Iodopropynyl carbamate | 600 | - | 7.0 |
| " | 900 | - | 10.0 |
| " | 150 | 500 | 8.0 |
| " | 300 | 500 | 9.0 |

## Claims

1. A coating composition comprising:

   a base composition; and
   a stain resistant additive blended with the base composition, the stain resistant additive comprising a metal complexed with an acetoacetate derivative, the acetoacetate derivative comprising:

   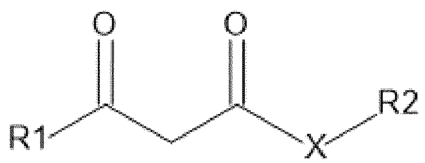

   wherein X is O or N, $R_1$ is an alkyl group containing 1 to 20 carbon atoms or is a fluoroalkyl group containing 1 to 20 carbon atoms, and $R_2$ is an alkyl group containing 1 to 20 carbon atoms or is a fluoroalkyl group containing 1 to 20 carbon atoms.

2. A coating composition as defined in claim 1, wherein the acetoacetate derivative comprises a fluorinated Beta-keto ester.

3. A coating composition as defined in claim 1, wherein the metal complexed with the acetoacetate derivative comprises an alkali metal, an alkaline earth metal, or a transition metal, preferably zinc, copper, calcium, sodium, potassium, titanium, or zirconium, and in particular zinc.

4. A coating composition as defined in any of the preceding claims, further comprising a biocide, the biocide comprising a pyrithione, an iodoalkynyl carbamate, an amino compound, a heterocyclic compound, an imidazole containing compound, or mixtures thereof.

5. A coating composition as defined in any of claims 1-3, further comprising a biocide, the biocide comprising 2-(methoxycarbonylamino)-benzimidazole, preferably further comprising at least one of an iodoalkynyl carbamate or a urea derivative.

6. A coating composition as defined in any of the preceding claims, further comprising a non-aqueous liquid carrier for the stain resistant additive, preferably wherein the liquid carrier comprises an alcohol, a glycol, an alcohol alkoxylate, a polysorbate, an alkoxylated ester, a polyether, or mixtures thereof.

7. A coating composition as defined in any of the preceding claims, wherein $R_1$ is a fluoroalkyl group containing 1-10 carbon atoms and $R_2$ is an alkyl group containing 1-20 carbon atoms, preferably wherein $R_1$ comprises a trifluorogroup and/or wherein $R_2$ contains 1-6 carbon atoms.

8. A coating composition as defined in any of the preceding claims, wherein the acetoacetate derivative forms a bidentate ligand with the metal, and/or wherein the base composition comprises a paint, and/or wherein the base

composition comprises an alkyd coating, a urethane coating, an unsaturated polyester coating, an epoxy coating, or a latex coating, and/or wherein the base composition contains 1 or more pigments.

**9.** A coating composition as defined in any of the preceding claims, wherein the stain resistant additive is present in the coating composition in an amount greater than about 0.01 % by weight, preferably in an amount greater than about 0.05% by weight, more preferably in an amount greater than about 0.1% by weight, and in particular in an amount greater than about 0.5% by weight, and preferably in an amount less than about 5% by weight, and in particular in an amount less than about 2% by weight and/or wherein the stain resistant additive comprises particles, the particles having an average particle size of from about 50 microns to about 0.01 microns, the particles being suspended within the coating composition.

**10.** A coating composition as defined in any of the preceding claims, wherein the acetoacetate derivative comprises ethyl 4,4,4- trifluoroacetoacetate and the metal comprises zinc.

**11.** A method for producing a coating composition comprising:

blending a base composition with a stain resistant additive, the stain resistant additive comprising particles comprised of a metal complexed with acetoacetate derivative, the acetoacetate derivative comprising:

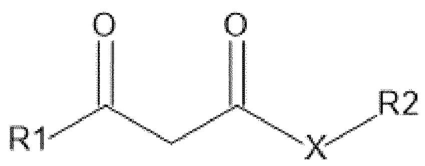

wherein X is O or N, $R_1$ is an alkyl group containing 1 to 20 carbon atoms or is a fluoroalkyl group containing 1 to 20 carbon atoms, and $R_2$ is an alkyl group containing 1 to 20 carbon atoms or is a fluoroalkyl group containing 1 to 20 carbon atoms.

**12.** An anti-stain composition for incorporation into a coating composition, the anti-stain composition comprising a suspension of a stain resistant additive contained in a liquid carrier, the stain resistant additive comprising a metal complexed with an acetoacetate derivative, the acetoacetate derivative comprising:

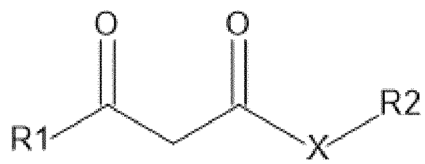

wherein X is O or N, $R_1$ is an alkyl group containing 1 to 20 carbon atoms or is a fluoroalkyl group containing 1 to 20 carbon atoms, and $R_2$ is an alkyl group containing 1 to 20 carbon atoms or is a fluoroalkyl group containing 1 to 20 carbon atoms; and
wherein the liquid carrier comprises an alcohol, a glycol, an alcohol alkoxylate, a polysorbate, an alkoxylated ester, a polyether, or mixtures thereof.

**13.** An anti-stain composition as defined in claim 12, wherein the liquid carrier comprises an alkylene glycol, such as propylene glycol, and/or wherein the stain resistant additive is present in the composition in an amount from about 5% to about 80% by weight, such as in an amount from about 25% to about 65% by weight.

**14.** An anti-stain composition as defined in claim 12 or 13, further comprising a biocide.

**15.** An anti-stain composition as defined in claim 14, wherein the biocide comprises a pyrithione or wherein the biocide comprises an iodoalkynyl carbamate, an amino compound, a urea derivative, an imidazole containing compound, or mixtures thereof.

**Patentansprüche**

1. Beschichtungszusammensetzung umfassend:

eine Basiszusammensetzung; und
ein schmutzabweisendes Zusatzmittel, das mit der Basiszusammensetzung vermischt ist, wobei das schmutzabweisende Zusatzmittel ein Metall umfasst, das mit einem Acetacetatderivat komplexiert ist, wobei das Acetacetatderivat

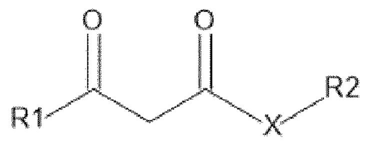

umfasst, wobei X O oder N ist, $R_1$ eine Alkylgruppe ist, die 1 bis 20 Kohlenstoffatome enthält, oder eine Fluoralkylgruppe ist, die 1 bis 20 Kohlenstoffatome enthält, und $R_2$ eine Alkylgruppe ist, die 1 bis 20 Kohlenstoffatome enthält, oder eine Fluoralkylgruppe ist, die 1 bis 20 Kohlenstoffatome enthält.

2. Beschichtungszusammensetzung wie in Anspruch 1 definiert, wobei das Acetacetatderivat einen fluorierten Beta-Ketoester umfasst.

3. Beschichtungszusammensetzung wie in Anspruch 1 definiert, wobei das Metall, das mit dem Acetacetatderivat komplexiert ist, ein Alkalimetall, ein Erdalkalimetall oder ein Übergangsmetall, bevorzugt Zink, Kupfer, Calcium, Natrium, Kalium, Titan oder Zirkonium und insbesondere Zink umfasst.

4. Beschichtungszusammensetzung wie in einem der vorhergehenden Ansprüche definiert, ferner ein Biozid umfassend, wobei das Biozid Pyrithion, ein Iodalkynylcarbamat, eine Aminoverbindung, eine heterocyclische Verbindung, eine Imidazol enthaltende Verbindung oder Mischungen davon umfasst.

5. Beschichtungszusammensetzung wie in einem der Ansprüche 1-3 definiert, ferner ein Biozid umfassend, wobei das Biozid 2-(Methoxycarbonylamino)benzimidazol umfasst, ferner bevorzugt mindestens eines von einem Iodalkynylcarbamat oder einem Harnstoffderivat umfasst.

6. Beschichtungszusammensetzung wie in einem der vorhergehenden Ansprüche definiert, ferner einen nichtwässrigen flüssigen Träger für das schmutzabweisende Zusatzmittel umfassend, wobei der flüssige Träger bevorzugt einen Alkohol, ein Glykol, ein Alkoholalkoxylat, ein Polysorbat, einen alkoxylierten Ester, einen Polyether oder Mischungen davon umfasst.

7. Beschichtungszusammensetzung wie in einem der vorhergehenden Ansprüche definiert, wobei $R_1$ eine Fluoralkylgruppe ist, die 1-10 Kohlenstoffatome enthält, und $R_2$ eine Alkylgruppe ist, die 1-20 Kohlenstoffatome enthält, wobei $R_1$ bevorzugt eine Trifluorgruppe umfasst und/oder wobei $R_2$ 1-6 Kohlenstoffatome enthält.

8. Beschichtungszusammensetzung wie in einem der vorhergehenden Ansprüche definiert, wobei das Acetacetatderivat einen zweizähnigen Liganden mit dem Metall bildet und/oder wobei die Basiszusammensetzung einen Lack umfasst und/oder wobei die Basiszusammensetzung eine Alkydbeschichtung, eine Urethanbeschichtung, eine Beschichtung aus ungesättigtem Polyester, eine Epoxidbeschichtung oder eine Latexbeschichtung umfasst und/oder wobei die Basiszusammensetzung 1 oder mehrere Pigmente enthält.

9. Beschichtungszusammensetzung wie in einem der vorhergehenden Ansprüche definiert, wobei das schmutzabweisende Zusatzmittel in der Beschichtungszusammensetzung in einer Menge von mehr als etwa 0,01 Gew.-%, bevorzugt in einer Menge von mehr als etwa 0,05 Gew.-%, noch bevorzugter in einer Menge von mehr als etwa 0,1 Gew.-% und insbesondere in einer Menge von mehr als etwa 0,5 Gew.-% und bevorzugt in einer Menge von weniger als etwa 5 Gew.-% und insbesondere in einer Menge von weniger als etwa 2 Gew.-% vorliegt und/oder wobei das schmutzabweisende Zusatzmittel Teilchen umfasst, wobei die Teilchen eine durchschnittliche Teilchengröße von etwa 50 Mikron bis etwa 0,01 Mikron aufweisen, wobei die Teilchen innerhalb der Beschichtungszusammensetzung suspendiert sind.

**10.** Beschichtungszusammensetzung wie in einem der vorhergehenden Ansprüche definiert, wobei das Acetacetatderivat Ethyl-4,4,4-trifluoracetacetat umfasst und das Metall Zink umfasst.

**11.** Verfahren zum Herstellen einer Beschichtungszusammensetzung, umfassend:
das Vermischen einer Basiszusammensetzung mit einem schmutzabweisenden Zusatzmittel, wobei das schmutzabweisende Zusatzmittel Teilchen umfasst, die aus einem Metall bestehen, das mit Acetacetatderivat komplexiert ist, wobei das Acetacetatderivat

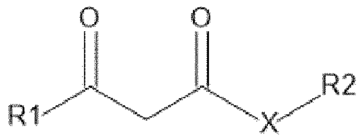

umfasst, wobei X O oder N ist, $R_1$ eine Alkylgruppe ist, die 1 bis 20 Kohlenstoffatome enthält, oder eine Fluoralkylgruppe ist, die 1 bis 20 Kohlenstoffatome enthält, und $R_2$ eine Alkylgruppe ist, die 1 bis 20 Kohlenstoffatome enthält, oder eine Fluoralkylgruppe ist, die 1 bis 20 Kohlenstoffatome enthält.

**12.** Beschmutzungsverhindernde Zusammensetzung zum Integrieren in eine Beschichtungszusammensetzung, wobei die beschmutzungsverhindernde Zusammensetzung eine Suspension eines schmutzabweisenden Zusatzmittels umfasst, das in einem flüssigen Träger enthalten ist, wobei das schmutzabweisende Zusatzmittel ein Metall umfasst, das mit einem Acetacetatderivat komplexiert ist, wobei das Acetacetatderivat

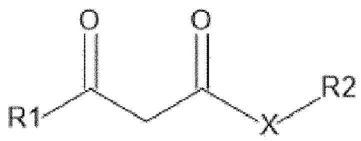

umfasst, wobei X 0 oder N ist, $R_1$ eine Alkylgruppe ist, die 1 bis 20 Kohlenstoffatome enthält, oder eine Fluoralkylgruppe ist, die 1 bis 20 Kohlenstoffatome enthält, und $R_2$ eine Alkylgruppe ist, die 1 bis 20 Kohlenstoffatome enthält, oder eine Fluoralkylgruppe ist, die 1 bis 20 Kohlenstoffatome enthält; und
wobei der flüssige Träger einen Alkohol, ein Glykol, ein Alkoholalkoxylat, ein Polysorbat, einen alkoxylierten Ester, einen Polyether oder Mischungen davon umfasst.

**13.** Beschmutzungsverhindernde Zusammensetzung wie in Anspruch 12 definiert, wobei der flüssige Träger ein Alkylenglykol wie beispielsweise Propylenglykol, umfasst und/oder wobei das schmutzabweisende Zusatzmittel in der Zusammensetzung in einer Menge von etwa 5 bis etwa 80 Gew.-%, wie beispielsweise in einer Menge von etwa 25 bis etwa 65 Gew.-% vorliegt.

**14.** Beschmutzungsverhindernde Zusammensetzung wie in Anspruch 12 oder 13 definiert, ferner ein Biozid umfassend.

**15.** Beschmutzungsverhindernde Zusammensetzung wie in Anspruch 14 definiert, wobei das Biozid ein Pyrithion umfasst oder wobei das Biozid ein Iodalkynylcarbamat, eine Aminoverbindung, ein Harnstoffderivat, eine Imidazol enthaltende Verbindung oder Mischungen davon umfasst.

## Revendications

**1.** Composition de revêtement comprenant :

une composition de base ; et
un additif résistant aux taches mélangé avec la composition de base, l’additif résistant aux taches comprenant un métal complexé avec un dérivé d’acétoacétate, le dérivé d’acétoacétate comprenant :

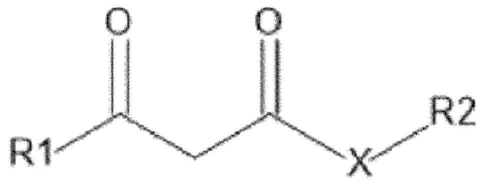

dans laquelle X est O ou N, $R_1$ est un groupe alkyle contenant de 1 à 20 atomes de carbone ou est un groupe fluoroalkyle contenant de 1 à 20 atomes de carbone, et $R_2$ est un groupe alkyle contenant de 1 à 20 atomes de carbone ou est un groupe fluoroalkyle contenant de 1 à 20 atomes de carbone.

**2.** Composition de revêtement telle que définie dans la revendication 1, dans laquelle le dérivé d'acétoacétate comprend un bêta-cétoester fluoré.

**3.** Composition de revêtement telle que définie dans la revendication 1, dans laquelle le métal complexé avec le dérivé d'acétoacétate comprend un métal alcalin, un métal alcalino-terreux ou un métal de transition, de préférence le zinc, le cuivre, le calcium, le sodium, le potassium, le titane ou le zirconium, et en particulier le zinc.

**4.** Composition de revêtement telle que définie dans l'une quelconque des revendications précédentes, comprenant en outre un biocide, le biocide comprenant une pyrithione, un carbamate d'iodoalcynyle, un composé aminé, un composé hétérocyclique, un composé contenant de l'imidazole, ou des mélanges de ceux-ci.

**5.** Composition de revêtement telle que définie dans l'une quelconque des revendications 1 à 3, comprenant en outre un biocide, le biocide comprenant le 2-(méthoxycarbonylamino)-benzimidazole, de préférence comprenant en outre au moins l'un parmi un carbamate d'iodoalcynyle ou un dérivé d'urée.

**6.** Composition de revêtement telle que définie dans l'une quelconque des revendications précédentes, comprenant en outre un véhicule liquide non aqueux pour l'additif résistant aux taches, de préférence dans laquelle le véhicule liquide comprend un alcool, un glycol, un alcoxylate d'alcool, un polysorbate, un ester alcoxylé, un polyéther, ou des mélanges de ceux-ci.

**7.** Composition de revêtement telle que définie dans l'une quelconque des revendications précédentes, dans laquelle $R_1$ est un groupe fluoroalkyle contenant de 1 à 10 atomes de carbone et $R_2$ est un groupe alkyle contenant de 1 à 20 atomes de carbone, de préférence dans laquelle $R_1$ comprend un groupe trifluoré et/ou dans laquelle $R_2$ contient de 1 à 6 atomes de carbone.

**8.** Composition de revêtement telle que définie dans l'une quelconque des revendications précédentes, dans laquelle le dérivé d'acétoacétate forme un ligand bidenté avec le métal, et/ou dans laquelle la composition de base comprend une peinture, et/ou dans laquelle la composition de base comprend un revêtement alkyde, un revêtement uréthane, un revêtement polyester insaturé, un revêtement époxy ou un revêtement latex, et/ou dans laquelle la composition de base contient 1 ou plusieurs pigments.

**9.** Composition de revêtement telle que définie dans l'une quelconque des revendications précédentes, dans laquelle l'additif résistant aux taches est présent dans la composition de revêtement en une quantité supérieure à environ 0,01 % en poids, de préférence en une quantité supérieure à environ 0,05 % en poids, plus préférablement en une quantité supérieure à environ 0,1 % en poids, et en particulier en une quantité supérieure à environ 0,5 % en poids, et de préférence en une quantité inférieure à environ 5 % en poids, et en particulier en une quantité inférieure à environ 2 % en poids et/ou dans laquelle l'additif résistant aux taches comprend des particules, les particules ayant une granulométrie moyenne d'environ 50 microns à environ 0,01 micron, les particules étant suspendues au sein de la composition de revêtement.

**10.** Composition de revêtement telle que définie dans l'une quelconque des revendications précédentes, dans laquelle le dérivé d'acétoacétate comprend le 4,4,4-trifluoroacétoacétate d'éthyle et le métal comprend le zinc.

**11.** Procédé de production d'une composition de revêtement comprenant :

le mélange d'une composition de base avec un additif résistant aux taches, l'additif résistant aux taches comprenant des particules constituées d'un métal complexé avec un dérivé d'acétoacétate, le dérivé d'acétoacétate

comprenant :

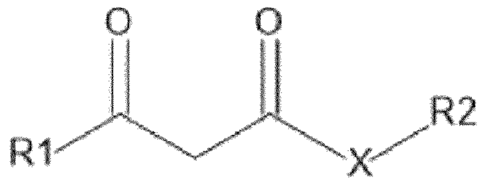

dans laquelle X est O ou N, $R_1$ est un groupe alkyle contenant de 1 à 20 atomes de carbone ou est un groupe fluoroalkyle contenant de 1 à 20 atomes de carbone, et $R_2$ est un groupe alkyle contenant de 1 à 20 atomes de carbone ou est un groupe fluoroalkyle contenant de 1 à 20 atomes de carbone.

**12.** Composition anti-taches pour une incorporation dans une composition de revêtement, la composition anti-taches comprenant une suspension d'un additif résistant aux taches contenu dans un véhicule liquide, l'additif résistant aux taches comprenant un métal complexé avec un dérivé d'acétoacétate, le dérivé d'acétoacétate comprenant :

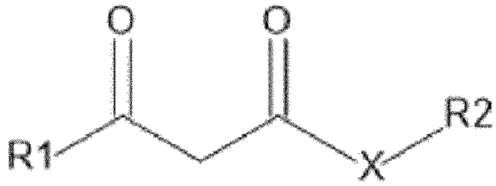

dans laquelle X est O ou N, $R_1$ est un groupe alkyle contenant de 1 à 20 atomes de carbone ou est un groupe fluoroalkyle contenant de 1 à 20 atomes de carbone, et $R_2$ est un groupe alkyle contenant de 1 à 20 atomes de carbone ou est un groupe fluoroalkyle contenant de 1 à 20 atomes de carbone ; et
dans laquelle le véhicule liquide comprend un alcool, un glycol, un alcoxylate d'alcool, un polysorbate, un ester alcoxylé, un polyéther, ou des mélanges de ceux-ci.

**13.** Composition anti-taches telle que définie dans la revendication 12, dans laquelle le véhicule liquide comprend un alkylène glycol, tel que le propylène glycol et/ou dans laquelle l'additif résistant aux taches est présent dans la composition en une quantité d'environ 5 % à environ 80 % en poids, telle qu'en une quantité d'environ 25 % à environ 65 % en poids.

**14.** Composition anti-taches telle que définie dans la revendication 12 ou 13, comprenant en outre un biocide.

**15.** Composition anti-taches telle que définie dans la revendication 14, dans laquelle le biocide comprend une pyrithione ou dans laquelle le biocide comprend un carbamate d'iodoalcynyle, un composé aminé, un dérivé d'urée, un composé contenant de l'imidazole, ou des mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62910091
- EP 19206369
- US 6485786 B


### Non-patent literature cited in the description


- *CHEMICAL ABSTRACTS,* 25322-68-3
- *CHEMICAL ABSTRACTS,* 107-21-1
- *CHEMICAL ABSTRACTS,* 57-55-6
- *CHEMICAL ABSTRACTS,* 9002-92-0
- *CHEMICAL ABSTRACTS,* 9002-93-1
- *CHEMICAL ABSTRACTS,* 9005-64-5
- *CHEMICAL ABSTRACTS,* 111-96-6
- *CHEMICAL ABSTRACTS,* 112-49-2
- *CHEMICAL ABSTRACTS,* 143-24-8
- *CHEMICAL ABSTRACTS,* 1121-31-9
- *CHEMICAL ABSTRACTS,* 1121-30-8